# EUROPEAN PATENT SPECIFICATION

(11) **EP 0 429 448 B1**
(45) Date of publication and mention of the grant of the patent: **13.04.1994**
(21) Application number: 89902989.6
(22) Date of filing: 03.02.1989
(51) Int. Cl.: F16L 9/18, F16L 11/04, B29C 33/34, B29C 45/33

(54) **STABILIZED INJECTION MOLDING WHEN USING A COMMON MOLD PART WITH SEPARATE COMPLEMENTARY MOLD PARTS**
STABILISIERTES SPRITZGIESSEN WÄHREND DER ANWENDUNG EINES GEMEINSAMEN FORMTEILS MIT SEPARATEN KOMPLEMENTÄREN FORMTEILEN
PROCEDE DE MOULAGE PAR INJECTION STABILISE LORS DE L'UTILISATION D'UNE PARTIE DE MOULES COMMUNES AVEC DES PARTIES DE MOULES COMPLEMENTAIRES SEPAREES

(30) Priority: 05.02.1988 US 152670
(43) Date of publication of application: 05.06.1991
(73) Proprietor: PRIMTEC, Rancho Santa Fe, CA 92067 (US)
(72) Inventor: SORENSEN, Jens, Ole, Rancho Santa Fe, CA 92067 (US)
(74) Representative: Wilson, Nicholas Martin
(86) International application number: US8900466
(87) International publication number: WO8907219

(56) References cited:
- JP-B- 5 595 548
- US-A- 3 543 338
- US-A- 3 807 920
- US-A- 3 832 110
- US-A- 3 914 081
- US-A- 4 347 209
- US-A- 4 422 995
- US-A- 4 459 256
- PATENT ABSTRACTS OF JAPAN, vol. 10, no. 207 (M-500)[2263], 19th July 1986; & JP-A-61 047 223 (KAMAYA KAGAKU KOGYO) 07-03-1986

## Description

### BACKGROUND OF THE INVENTION

The present invention generally pertains to injection molding of plastic products and is particularly directed to stabilizing the dimensions of mold cavities during the injection steps when using a common mold part and at least two complementary mold parts to assemble separate mold cavities for receiving separate injections of plastic materials to produce a thin-walled, hollow plastic product.

The use of a common mold part with at least two complementary mold parts to provide separate mold cavities for receiving separate injections of plastic materials for producing a hollow plastic product is known. In one known prior art method of cyclic injection molding a hollow plastic product, a first mold cavity is defined by a first common mold part and a first complementary mold part; and a second mold cavity is defined by the first common mold part and a second complementary mold part. The method includes the steps of:
(a) combining the first common mold part with the first complementary mold part to assemble the first mold cavity;
(b) injecting a first plastic material into the first mold cavity;
(c) solidifying the injected first plastic material to form a first plastic material component;
(d) combining the first common mold part with the second complementary mold part to assemble the second mold cavity with the first plastic material component attached to the first common mold part so that when the second mold cavity is assembled the first plastic material component is contained within the second mold cavity;
(e) injecting a second plastic material into the second mold cavity while the first plastic material component is contained therein; and
(f) solidifying the injected second plastic material so as to form a second plastic material component that fuses with the first plastic material component to produce a hollow plastic product.

It also is known to expand upon this method by further using a third mold cavity defined by a second common mold part and the first complementary mold part, and a fourth mold cavity defined by the second common mold part and the second complementary mold part. The method further includes the steps of:
(h) during step (d), combining the second common mold part with the first complementary mold part to assemble the third mold cavity;
(i) during step (e), injecting a third plastic material into the third mold cavity;
(j) during step (f), solidifying the injected third plastic material to form a third plastic material component;
(k) during step (a), combining the second common mold part with the second complementary mold part to assemble the fourth mold cavity with the third plastic material attached to the second common mold part so that when the fourth mold cavity is assembled the third plastic material is contained within the fourth mold cavity;
(l) during step (b), injecting the fourth plastic material into the fourth mold cavity while the solidified third plastic material is contained therein; and
(m) during step (c), solidifying the injected fourth plastic material so as to form a fourth plastic material component that fuses with the third plastic material to produce a second said hollow plastic product.

This method has been used for producing hollow plastic products having composite walls of separately injected plastic materials. In performing such method, the first plastic material is injected until it reaches the parting line between the first common mold part and the first complementary mold part; the second plastic material is injected until it reaches the parting line between the first common mold part and the second complementary mold part; the third plastic material is injected until it reaches the parting line between the second common mold part and the first complementary mold part; and the fourth plastic material is injected until it reaches the parting line between the second common mold part and the second complementary mold part.

Typically, all four plastic materials are the same.

### SUMMARY OF THE INVENTION

The present invention provides a method and apparatus for injecting molding hollow, thin-walled plastic products, wherein relative movement between the common mold part and the complementary mold parts is impeded during injection of the plastic materials.

According to the present invention, in the injection molding method described above, the step of solidifying the injected first plastic material to form the first plastic material component (step (c)) includes the step of
(g) shaping the first plastic material component such that when the first plastic material component is so contained in the second mold cavity the first plastic material component provides one or more stabilizing regions that rigidly secure the first common mold part in position in relation to the second complementary mold part in order to impede movement of the first common mold part in relation to the second complementary mold part during the injection of the second plastic material into the second mold cavity, to thereby produce a thin-walled plastic product having controlled dimensions in that the wall-thickness dimensions of the second mold cavity are stabilized by the stabilizing regions, and is characterized in that the first mold cavity has a portion defining said rim of the product and step (b) comprises the step of:
(h) injecting the first plastic material until it reaches said rim defining portion of the first mold cavity.

When the method of the present invention utilizes two common mold cavities, such as described above, the step of solidifying the injected third plastic material to form the third plastic material component (step (j)) includes the step of shaping the third plastic material component such that when the third plastic material component is so contained in the fourth mold cavity the solidified third plastic material provides one or more stabilizing regions that rigidly secure the second common mold part in position in relation to the second complementary mold part in order to impede movement of the second common mold part in relation to the second complementary mold part during the injection of the fourth plastic material into the fourth mold cavity, to thereby produce a second thin-walled plastic product having controlled dimensions.

The method of the present invention may also be used for molding a product having a side wall including an approximately longitudinal strip that may be transparent to provide a transparent window in the side wall. This feature is particularly advantageous when it is desired to provide a longitudinal window in the side wall in order to monitor the level of a substance, such as a fluid, contained in the plastic product. In one embodiment, the first plastic material component is shaped to provide at least one stabilizing region that is transverse to a parting line between the first common mold part and the first complementary mold part, whereby the longitudinal strip is defined by the transverse stabilizing region. A transparent window is provided in the side wall by injecting a transparent first plastic material into the first mold cavity. A nontransparent second plastic material is injected into the second mold cavity to provide a nontransparent background for printing in the remainder of the side wall. In an alternative embodiment, the first plastic material component is shaped such that when the first plastic material component is contained in the second mold cavity, the second mold cavity defines at least one unfilled cavity region that is transverse to a parting line between the first common mold part and the second complementary mold part, whereby the longitudinal strip is defined by the unfilled transverse cavity region. In this embodiment, a transparent window is provided in the side wall by injecting a transparent second plastic material into the second mold cavity; and a nontransparent first plastic material is injected into the first mold cavity to provide a nontransparent background for printing in the remainder of the side wall.

In another aspect of the method of the present invention, the step of shaping the first plastic material component (step (g)) may further include the step of providing a first complementary mold part that is dimensioned in relation to the first common mold part such that when combined with the first common mold part to assemble the first mold cavity, portions of the first complementary mold part contact portions of the first common mold part to rigidly secure the first common mold part in position in relation to the first complementary mold part in order to impede movement of the first common mold part in relation to the first complementary mold part during the injection of the first plastic material into the first mold cavity.

The present invention further provides apparatus for performing the method of the present invention and hollow, thin-walled plastic products molded according to the method of the present invention.

Additional features of the present invention are described in relation to the description of the preferred embodiments.

### BRIEF DESCRIPTION OF THE DRAWING

Figures 1A and 1B are sectional views illustrating a first mold cavity assembled by combining a first common mold part with a first complementary mold part. Figure 1A is a top sectional view taken along lines A-A in Figure 1B; and Figure 1B is a side sectional view taken along lines B-B in Figure 1A. Figures 1A and 1B further show the first plastic material injected into the first mold cavity.

Figures 2A and 2B are sectional views illustrating a second mold cavity assembled by combining the first common mold part of Figures 1A and 1B with a second complementary mold part. Figure 2A is a top sectional view taken along lines A-A in Figure 2B; and Figure 2B is a side sectional view taken along lines B-B in Figure 2A. Figures 2A and 2B further show the first plastic material component contained in the second mold cavity and the second plastic material injected into the second mold cavity.

Figures 3A through 3D illustrate a series of steps in the performance of a preferred embodiment of the method of the present invention.

Figure 4 illustrates a first plastic material component formed in an alternative embodiment of the method of the present invention.

Figure 5 is a sectional view illustrating a second mold cavity containing the first plastic material component of Figure 4. Figure 5 also is a sectional view illustrating a product molded according to such alternative embodiment of the method of the present invention.

Figure 6 illustrates a first plastic material component formed in a further alternative embodiment of the method of the present invention.

Figure 7 is a sectional view illustrating a second mold cavity containing the first plastic material component of Figure 6. Figure 5 also provides a sectional view of a product molded according to such further alternative embodiment of the method of the present invention.

### DESCRIPTION OF THE PREFERRED EMBODIMENTS

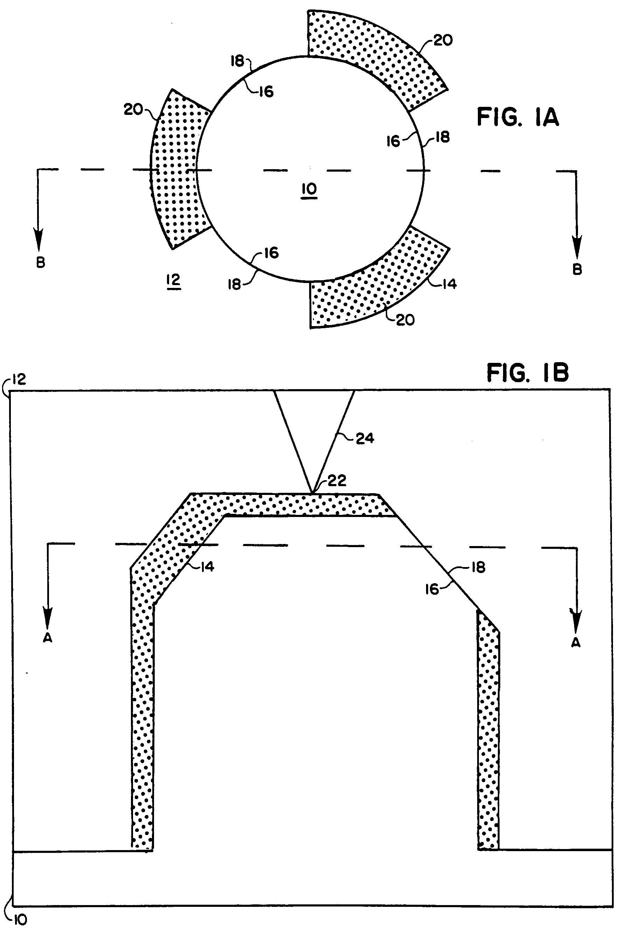

Referring to Figures 1A and 1B the apparatus of a preferred embodiment of the present invention includes a first common mold part 10 and first complementary mold part 12. The first common mold part 10 is combined with the first complementary mold part 12 to assemble a first mold cavity 14. The first complementary mold part 12 is dimensioned in relation to the first common mold part 10 such that when so combined with the first common mold part 10 to assemble the first mold cavity 14, portions 16 of the first complementary mold part 12 contact portions 18 of the first common mold part 10 to rigidly secure the first common mold part 10 in position in relation to the first complementary mold part 12 in order to impede movement of the first common mold part 10 in relation to the first complementary mold part 12 during injection of the first plastic material 20 into the first mold cavity 14. The first plastic material 20 is injected into the mold cavity 14 through a gate 22 and a runner 24 in the first complementary mold part 12.

The injected first plastic material 20 is solidified to form a first plastic material component 20 by cooling the injected first plastic material in the first mold cavity 14, whereby the first plastic material component 20 is shaped in accordance with the dimensions of the first mold cavity 14. In an alternative embodiment, the first plastic material component may be further shaped following removal of the first complementary mold part 12.

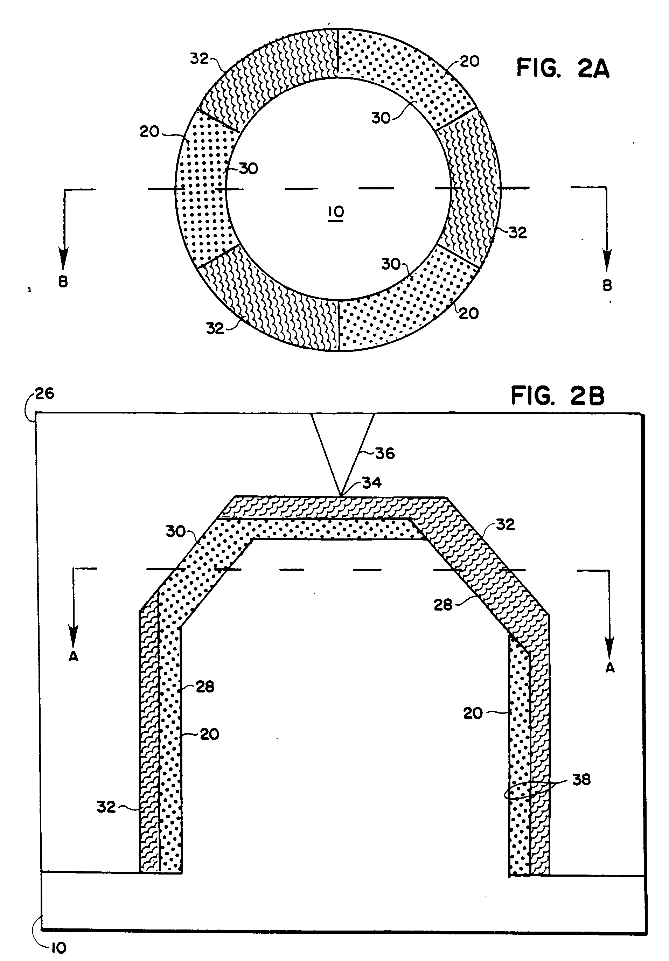

Referring to Figures 2A and 2B the apparatus of a preferred embodiment of the present invention includes a second complementary mold part 26. The first common mold part 10 is combined with the second complementary mold part 26 to assemble a second mold cavity 28 with the first plastic material component 20 attached to the first common mold part 10, so that when the second mold cavity 28 is assembled, the first plastic material component 20 is contained within the second mold cavity 28.

The first plastic material component 20 is shaped such that when the first plastic material component 20 is so contained in the second mold cavity 28 the first plastic material component 20 provides one or more stabilizing regions 30 that rigidly secure the first common mold part 10 in position in relation to the second complementary mold part 26 in order to impede movement of the first common mold part 10 in relation to the second complementary mold part 26 during the insertion of a second plastic material 32 into the second mold cavity 28.

The second plastic material 32 is injected into the second mold cavity 28 through a gate 34 and a runner 36 in the second complementary mold part 26 while the first plastic material component 20 is contained in the second mold cavity 28.

The injected second plastic material 32 is solidified by cooling in the second mold cavity 28 so as to form a second plastic material component 32 that fuses with the first plastic material component 20 to produce thin-walled hollow plastic product 38 having controlled dimensions.

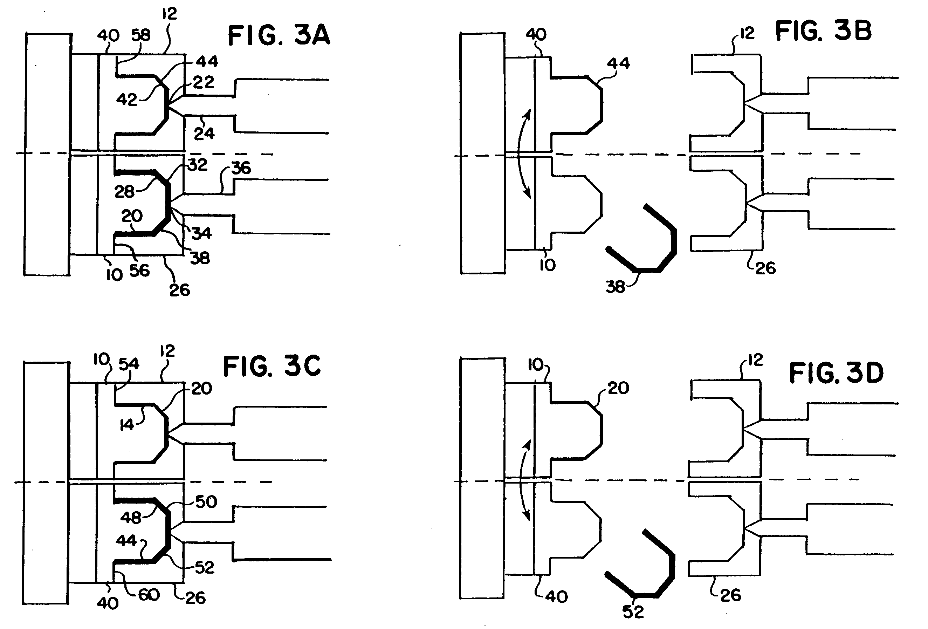

A preferred embodiment of a method of cyclic injection molding of hollow, thin-walled plastic products according to the present invention, utilizing two common mold parts and two complementary mold parts to provide four mold cavities is described with reference to Figures 3A through 3D.

Referring to Figure 3A, a second common mold part 40 is combined with the first complementary mold part 12 to assemble a third mold cavity 42; while at the same time the first common mold part 10 is combined with the second complementary mold part 26 to assemble a second mold cavity 28, with the first plastic material component 18 attached to the first common mold part 10, so that when the second mold cavity 28 is assembled, the first plastic material component 20 is contained within the second mold cavity 28. The formation of the first plastic material component 20 is discussed above in relation to Figures 1A and 1B.

A third plastic material 44, which may be the same as the first plastic material 20, is injected into the third mold cavity 42 through the gate 22 and the runner system 24 contained in the first complementary mold part 12; while at the same time, the second plastic material 32 is injected into the second mold cavity 28 through the gate 34 and a runner system 36 contained in the second complementary mold part 26.

The injected third plastic material 44 is solidified by cooling in the third mold cavity 42 to form a third plastic material component 44; while at the same time the injected second plastic material 32 is solidified by cooling in the second mold cavity 28 so as to form the second plastic material component 28 that fuses with the first plastic material component 20 to produce the hollow, thin-walled plastic product 38.

Referring to Figure 3B, the first common mold part 10 and the second common mold part 40 are separated from the second complementary mold part 26 and the first complementary mold part 12 respectively; and the molded hollow, thin-walled plastic product 38 is ejected from first common mold part 10, while the third plastic material component 44 is retained on the third third common mold part 40. The positions of the first common mold part 10 and the second common mold part 40 are then interchanged from those shown in Figure 3B to those shown in Figure 3C.

Referring to Figure 3C, the first common mold part 10 is combined with the first complementary mold part 12 to assemble the first mold cavity 14; while at the same time the second common mold part 40 is combined with the second complementary mold part 26 to assemble a fourth mold cavity 48, with the first plastic material component 44 attached to the third common mold part 40, so that when the fourth mold cavity 48 is assembled, the third plastic material component 44 is contained within the fourth mold cavity 48. The formation of the third plastic material component 44 is discussed above in relation to Figure 3A.

The first plastic material 20, which may be the same as the third plastic material 44, is injected into the first mold cavity 14 through the gate 22 and the runner system 24 contained in the first complementary mold part 12; while at the same time, a fourth plastic material 50, which may be identical to the second plastic material 32, is injected into the fourth mold cavity 48 through the gate 34 and a runner system 36 contained in the second complementary mold part 26.

The injected first plastic material 20 is solidified by cooling in the first mold cavity 14 to form another first plastic material component 20; while at the same time the injected fourth plastic material 50 is solidified by cooling in the fourth mold cavity 48 so as to form the second plastic material component 48 that fuses with the third plastic material component 44 to produce a second hollow, thin-walled plastic product 52.

Referring to Figure 3D, the first common mold part 10 and the second common mold part 40 are separated from the first complementary mold part 12 and the second complementary mold part 26 respectively; and the second molded hollow, thin-walled plastic product 52 is ejected from second common mold part 40, while the first plastic material component 20 is retained on the first common mold part 10. The positions of the first common mold part 10 and the second common mold part 40 are then interchanged from those shown in Figure 3D to those shown in Figure 3A, and the cycle is repeated.

As described above, the first plastic material component 20 is shaped such that when the first plastic material component 20 is contained in the second mold cavity 28, the first plastic material component 20 provides one or more stabilizing regions 30 that rigidly secure the first common mold part 20 in position in relation to the second complementary mold part 12 in order to impede movement of the first common mold part 10 in relation to the second complementary mold part 26 during injection of the second plastic material 32 into the second mold cavity 28.

Likewise, the third plastic material component 44 is shaped such that when the third plastic material component 44 is contained in the fourth mold cavity 48, the third plastic material component 44 provides one or more stabilizing regions that rigidly secure the second common mold part 40 in position in relation to the second complementary mold part 26 in order to impede movement of the second common mold part 40 in relation to the second complementary mold part 26 during injection of the fourth plastic material 50 into the fourth mold cavity 48.

The method described above with reference to Figures 3A through 3D may be used for producing hollow, thin-walled plastic products having laminated walls of different plastic materials. In performing such method, the first plastic material 20 is injected until it reaches a parting line 54 between the first common mold part 10 and the first complementary mold part 12 (Figure 3C); and the second plastic material 32 is injected until it reaches a parting line 56 between the first common mold part 10 and the second complementary mold part 26 (Figure 3A). Likewise, the third plastic material 44 is injected until it reaches a parting line 58 between the second common mold part 40 and the first complementary mold part (Figure 3A); and the fourth plastic material 50 is injected until it reaches a parting line 60 between the second common mold part 40 and the second complementary mold part 26.

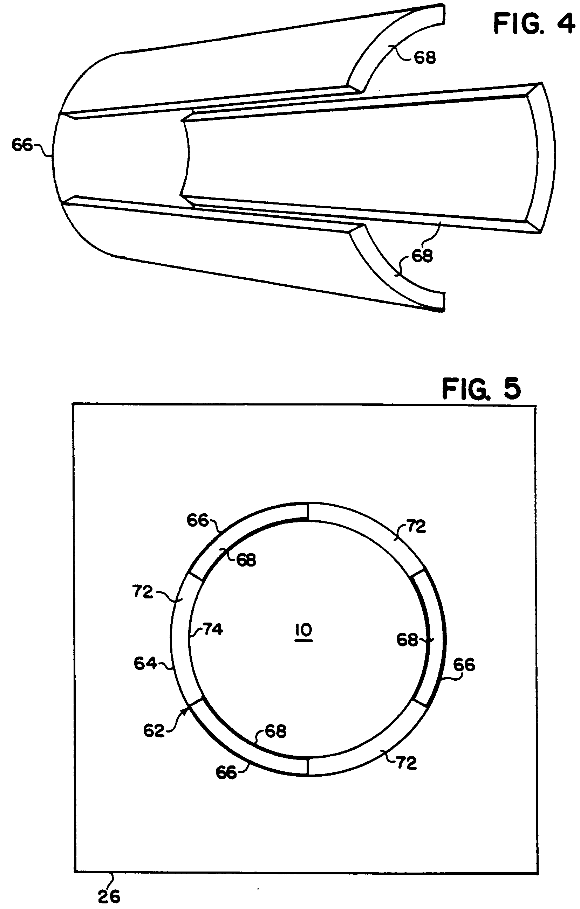

Referring to Figures 4 and 5, the method of the present invention also may be used for molding a product 62 having a side wall 64 including at least one approximately longitudinal strip that may be transparent to thereby provide a transparent window in the side wall 64.

In one embodiment, the first plastic material component 66 is shaped to provide at least one stabilizing region 68 that is transverse to a parting line 54 (Figure 3C) between the first common mold part 10 and the first complementary mold part 12, whereby each longitudinal strip is defined by a transverse stabilizing region 68. The stabilizing regions 68 need not extend all the way to the parting line 54. A transparent window is provided in the side wall 64 by injecting a transparent first plastic material into the first mold cavity to provide the first plastic material component 66. A nontransparent second plastic material 72 is injected into the second mold cavity 74 to provide a nontransparent background for printing in the remainder of the side wall 64.

In an alternative embodiment, the first plastic material component 66 is shaped such that when the first plastic material component 66 is contained in the second mold cavity 74, the second mold cavity 74 defines at least one unfilled cavity region 72 that is transverse to a parting line 56 (Figure 3A) between the first common mold part 10 and the second complementary mold part 26, whereby longitudinal strips may be provided in the unfilled transverse cavity regions 72. The unfilled transverse cavity regions 72 need not extend all the way to the parting line 56. In this embodiment, transparent windows are defined in the side wall 64 by injecting a transparent second plastic material into the second mold cavity 74 to fill the transverse cavity regions 72. Prior thereto, a nontransparent first plastic material is injected into the first mold cavity to form the first plastic material component 66 and thereby provide a nontransparent background for printing in the remainder of the side wall 64.

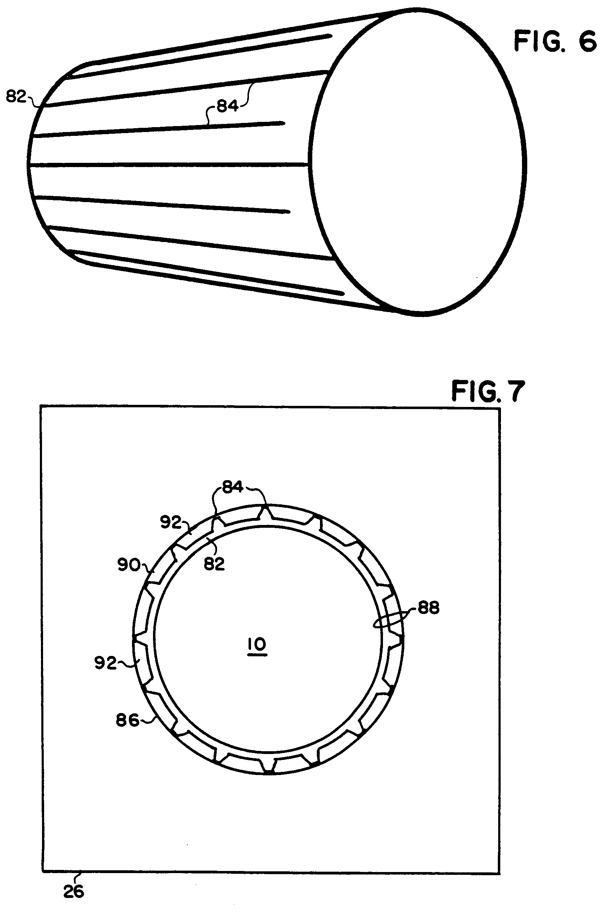

Referring to Figures 6 and 7, in a further preferred embodiment, the first plastic material component 82 that is shaped as shown in Figure 6 to include a plurality of symmetrically disposed stabilizing regions 84, which extend approximately longitudinally over a portion of the side wall 86 of the molded product 88. The first plastic material component 82 is molded in a first mold cavity in accordance with the teaching of applicant's United States Patent Application No. 7,463, filed January 26, 1987 and in accordance of the above description to the extent that such description is compatible with the teaching of Application No. 7,463. After the first plastic material component 82 is formed in a first mold cavity, which is assembled by combining a first complementary mold part 12 and a first common mold part 10, the first plastic component 82 is retained on the first common mold part 10 while the first common mold part 10 is combined with a second complementary mold part 26 to assemble a second mold cavity 90, as shown in Figure 7.

Referring to Figure 7, the first plastic material component 82 is shaped such that when the first plastic material component 82 is contained in the second mold cavity 90, the first plastic material component 82 provides one or more stabilizing regions 84 that rigidly secure the first common mold part 10 in position in relation to the second complementary mold part 26 in order to impede movement of the first common mold part 10 in relation to the second complementary mold part 26 during injection of the second plastic material 92 into the second mold cavity 90.

The injected second plastic material 92 is solidified by cooling in the second mold cavity 90 to form a second plastic material component 92 that fuses with the first plastic material component 82 to produce the hollow, thin-walled, plastic product 88. The side wall 86 of the molded product 88 thus includes two layers of plastic 82, 92. The molded product 88 has controlled dimensions, is generally shaped as shown in Figure 6, and has a lateral cross section as shown in Figure 7. The side wall 86 of the molded product thus includes two layers of plastic 82, 92.

The stabilizing regions 84 have a wall thickness equal to the thickness of the side wall 86 and are transverse to the parting line 56 (Figure 3A) between the first common mold part 10 and the second complementary mold part 26 to thereby provide longitudinal transparent windows 84 in the side wall 86. The stabilizing regions 84 need not extend all the way to the parting line 56. In a preferred embodiment of this product, the other side-wall layer 90 is nontransparent and extends throughout the majority of the side well 86.

The present invention may be modified from the embodiments illustrated and described above. The common mold parts may be cavity mold parts instead of core mold parts, as illustrated and described herein. In addition, injections of plastic material into any given mold cavity may be made through more than one gate. Also, injections of plastic materials may be made into more than two mold cavities simultaneously, whereby the number of mold cavities included in the mold may be a multiple of the number of separate mold cavities required to produce a single product. For example, when using the method described and illustrated herein for producing a product composed of two plastic material components formed following injection of plastic material into two separate mold cavities, the number of mold cavities included in the mold may be any multiple of two, i.e. 2, 4, 6, etc.

The present invention also can be used to mold products including more than two plastic material components formed following injection of plastic material into more than two separate mold cavities. In an embodiment requiring three separate mold cavities, a third complementary mold part is used, and the fused first and second plastic material components are retained on the first common mold part when the first common mold part is combined with the third complementary mold part to assemble the third mold cavity, with the fused first and second mold parts being shaped to stabilize the common mold in relation to the third complementary mold part during injection of a third plastic material into the third mold cavity.

The core-stabilization techniques described in applicant's U.S. Patents Nos. 4,381,275 and 4,508,676; U.S. Patent No. 3,737,272 to Stegmuller; and in Australian Patent Specification 17,577/70 filed by Ryles and published January 20, 1972 may be used to stabilize the common mold part in relation to the first complementary mold part during the injection of the first plastic material in lieu of the technique described above with relation to Figures 1A and 1B.

The first and second plastic materials may be either the same material of different materials. It sometimes advantageous to use first and second plastic materials having different physical characteristics. For example, the present invention is ideally suited for molding a hollow, thin-walled plastic product in which the side wall must provide both a moisture barrier and a gas (such as Oxygen) barrier. To mold such a product, a plastic material having a desirable moisture-barrier characteristic is selected as one of the injected plastic materials; and a plastic material having a desirable gas-barrier characteristic is selected as the other injected plastic material.

## Claims

1. A method of cyclic injection molding a thin-walled, hollow, plastic product having an open end terminating in a rim (38,52) utilizing a first mold cavity (14) and a second mold cavity (28), the first mold cavity (14) being defined by a first common mold part (10) and a first complementary mold part (12), and the second mold cavity (28) being defined by the first common mold part (10) and a second complementary mold part (26), the method comprising the steps of:
(a) combining the first common mold part (10) with the first complementary mold part (12) to assemble the first mold cavity (14);
(b) injecting a first plastic material (20) into the first mold cavity (14);
(c) solidifying the injected first plastic material to form a first plastic material component;
(d) combining the first common mold part (10) with the second complementary mold part (26) to assemble the second mold cavity (28) with the first plastic material component (20) attached to the first common mold part (10) so that when the second mold cavity (28) is assembled the first plastic material component (20) is contained within the second mold cavity (28).
(e) injecting a second plastic material into the second mold cavity while the first plastic material component (20) is contained therein; and,
(f) solidifying the injected second plastic material (32) so as to form a second plastic material component that fuses with the first plastic material component (20) to produce a hollow, plastic product;
wherein the step (c) comprises the step of:
(g) shaping the first plastic material component (20) such that when the first plastic material component (20) is so contained in the second mold cavity (28) the first plastic material component (20) provides one or more stabilizing regions (30) that rigidly secure the first common mold part (10) in position in relation to the second complementary mold part (26) in order to impede movement of the first common mold part (10) in relation to the second complementary mold part (26) during step (e), to thereby produce a thin-walled plastic product having controlled dimensions;
characterized in that the first mold cavity (14) has a portion defining said rim of the product and step (b) comprises the step of:
(h) injecting the first plastic material (20) until it reaches said rim defining portion of the first mold cavity (14).

2. A method of cyclic injection molding according to claim 1, wherein the second mold cavity (28) has a portion defining said rim of the product and step (e) comprises the step of:
(i) injecting the second plastic material (32) until it reaches the portion of the second mold cavity (28) that defines the rim of the product.

3. A method according to claim 1 or 2 for molding a product (62) having a side wall (64) including an approximately longitudinal strip, wherein step (g) comprises shaping the first plastic material component (66) to provide at least one said stabilizing region (68) that is transverse to a parting line (54) between the first common mold part (10) and the first complementary mold part (12), whereby said longitudinal strip is defined by said transverse stabilizing region (68).

4. A method according to claim 3, wherein step (b) comprises injecting a said first plastic material (66) that is transparent, whereby said strip defines a transparent window in the side wall (64); and wherein step (e) comprises injecting a said second plastic material (72) that is nontransparent.

5. A method according to claim 1 for molding a product (62) having a side wall (64) including an approximately longitudinal strip, wherein step (g) comprises shaping the first plastic material component (66) such that when the first plastic material component is contained in the second mold cavity (74) the second mold cavity (74) defines at least one unfilled cavity region (72) that is transverse to a parting line (56) between the first common mold part (10) and the second complementary mold part (26), whereby said longitudinal strip is defined by said unfilled transverse cavity region (72).

6. A method according to claim 5, wherein step (b) comprises injecting a said first plastic material (66) that is nontransparent; and, wherein step (e) comprises injecting a said second plastic material that is transparent, whereby said strip defines a transparent window in the side wall (64).

7. A method according to claim 1, for cyclic injection molding a plurality of thin-walled, hollow, plastic products, further utilizing a third mold cavity (42) and a fourth mold cavity (48), the third mold cavity (42) being defined by a second common mold part (40) and the first complementary mold part (12) and the fourth mold cavity (48) being defined by the second common mold part (40) and the second complementary mold part (26), the method further comprising the steps of:
(j) during step (d), combining the second common mold part (40) with the first complementary mold part (12) to assemble the third mold cavity (42);
(k) during step (e), injecting a third plastic material into the third mold cavity (42);
(l) during step (f), solidifying the injected third plastic material to form third plastic material component (44);
(m) during step (a), combining the second common mold part (40) with the second complementary mold part (26) to assemble the fourth mold cavity (48) with the third plastic material (44) attached to the second common mold part (40) so that when the fourth mold cavity (48) is assembled the third plastic material (44) is contained within the fourth mold cavity (48);
(n) during step (b), injecting the fourth plastic material into the fourth mold cavity (48) while the solidified third plastic material is contained therein; and,
(o) during step (c), solidifying the injected fourth plastic material so as to form a fourth plastic material component (50) that fuses with the third plastic material to produce a second hollow plastic product (52);
wherein step (o) comprises the step of:
(p) shaping the third plastic material component (44) such that when the third plastic material component (44) is so contained in the fourth mold cavity (48) the third plastic material component (44) provides one or more stabilizing regions that rigidly secure the second common mold part (40) in position in relation to the second complementary mold part (26) in order to impede movement of the second common mold part (40) in relation to the second complementary mold part (26) during step (n) to thereby produce a second thin-walled plastic product having controlled dimensions.

8. A method according to claim 7, for producing said products having laminated walls,
wherein step (b) comprises the step of
(q) injecting the first plastic material until it reaches the parting line (54) between the first common mold part (10) and the first complementary mold part (12);
wherein step (e) comprises the step of:
(r) injecting the second plastic material until it reaches the parting line (56) between the first common mold part (10) and the second complementary mold part (26);
wherein step (i) comprises the step of:
(s) injecting the third plastic material until it reaches the parting line (58) between the second common mold part (40) and the first complementary mold part (12); and,
wherein step (n) comprises the step of:
(t) injecting the fourth plastic material (50) until it reaches the parting line (60) between the second common mold part (40) and the second complementary mold part (26).

9. A method according to claim 7, wherein the first plastic material is the same as the third plastic material and the second plastic material is the same as the fourth plastic material.

10. A method according to claim 1, wherein step (g) further comprises providing a said first complementary mold part (12) that is dimensioned in relation to the first common mold part (10) such that when so combined with the first common mold part (10) to assemble the first mold cavity (14), portions of the first complementary mold part (12) contact portions of the first common mold part (10) to rigidly secure the first common mold part in position in relation to the first complementary mold part (12) in order to impede movement of the first common mold part (10) in relation to the first complementary mold part (12) during step (b).

11. Apparatus for cyclic injection molding a thin-walled, hollow, plastic product having an open end terminating in a rim, comprising:
a first common mold part (10);
a first complementary mold part (12);
means for combining the first complementary mold part (12) with the first common mold part (10) to assemble a first mold cavity (14);
means (22,24) for injecting a first plastic material into the first mold cavity (14);
means for solidifying the injected first plastic material to form a first plastic material component (20);
a second complementary mold part (26);
means for combining the first common mold part (10) with the second complementary mold part (26) to assemble a second mold cavity (28) with the first plastic material component (20) attached to the first common mold part (10) so that when the second mold cavity (28) is assembled the first plastic material component (20) is contained within the second mold cavity (28);
means (34,36) for injecting a second plastic material into the second mold cavity (28) while the solidified first plastic material component is contained therein;
means for solidifying the injected second plastic material so as to form a second plastic material component (32) that fuses with the first plastic material component (20) to produce a hollow plastic product; and,
means for shaping the first plastic material component (20) such that when the solidified first plastic material component is so contained in the second mold cavity (28) the solidified first plastic material component (20) provides one or more stabilizing regions (30) that rigidly secure the first common mold part (10) in position in relation to the second complementary mold part (26) in order to impede movement of the first common mold part (10) in relation to the second complementary mold part (26) during injection of the second plastic material into the second mold cavity (28), to thereby produce a thin-walled plastic product having controlled dimensions, characterized in that:
the first mold cavity (14) has a portion which defines the rim of the product; and
the means for injecting the first plastic material comprises means for injecting the first plastic material until it reaches said rim defining portion of the first mold cavity (14).

12. Apparatus according to claim 11, wherein the second mold cavity (28) has a portion that defines the rim of the product and the means (34,36) for injecting the second plastics material is arranged to inject the second plastic material until it reaches said rim defining portion of the second mold cavity (28).

13. Apparatus according to claim 11 for molding a product having a side wall (64) including an approximately longitudinal strip,
wherein the means for shaping the first plastic material component shape the first plastic material component to provide at least one said stabilizing region (68) that is transverse to a parting line (54) between the first common mold part (10) and the first complementary mold part (12) whereby said longitudinal strip is defined by said transverse stabilizing region (68).

14. Apparatus according to claim 11 for molding a product (62) having a side wall (64) including an approximately longitudinal strip,
wherein the means for shaping the first plastic material component shape the first plastic material component (66) such that when the first plastic material component is contained in the second mold cavity (74), the second mold cavity (74) defines at least one unfilled cavity region (72) that is transverse to a parting line (56) between the first common mold part (10) and the second complementary mold part (26) whereby said longitudinal strip is defined by said unfilled transverse cavity region (72).

15. Apparatus according to claim 11, for cyclic injection molding a plurality of thin-walled, hollow, plastic products, further comprising:
a second common mold part (40);
means for combining the first complementary mold part (12) with the second common mold part (40) to assemble a third mold cavity (42) while the second complementary mold part (40) is combined with the first common mold part (10) to assemble the second mold cavity;
means (22,24) for injecting a third plastic material into the third mold cavity (42);
means for solidifying the injected third plastic material to form a third plastic material component (44);
means for combining the second common mold part (40) with the second complementary mold part (26) to assemble a fourth mold cavity (48) while the first complementary mold part (12) is combined with the first common mold part (10) to assemble the first mold cavity (14), while retaining the third plastic material attached to the second common mold part (40) so that when the fourth mold cavity (48) is assembled the third plastic material is contained within the fourth mold cavity;
means (34,36) for injecting a fourth plastic material into the fourth mold cavity (48) while the solidified third plastic material is contained therein; and,
means for solidifying the injected fourth plastic material so as to form a fourth plastic material component (50) that fuses with the third plastic material to produce a second hollow plastic product;
wherein the means for solidifying the injected third plastic material includes means for shaping the third plastic material component (44) such that when the third plastic material component (44) is so contained in the fourth mold cavity (48) the solidified third plastic material provides one or more stabilizing regions that rigidly secure the second common mold part (40) in position in relation to the first complementary mold part (12) in order to impede movement of the second common mold part (40) in relation to the first complementary mold part (12) during injection of the fourth plastic material into the fourth mold cavity (48), to thereby produce a second thin-walled plastic product having controlled dimensions.

16. Apparatus according to claim 11, wherein the first complementary mold part (12) is dimensioned in relation to the first common mold part (10) such that when so combined with the first common mold part to assemble the first mold cavity (14), portions of the first complementary mold part (12) contact portions of the first common mold part (10) to rigidly secure the first common mold part (10) in position in relation to the first complementary mold part (12) in order to impede movement of the first common mold part (10) in relation to the first complementary mold part (12) during injection of the first plastic material into the first mold cavity (14).

## Patentansprüche

1. Verfahren zum zyklischen Spritzformen eines dünnwandigen hohlen Kunststoffprodukts mit offenem, das zu einem Rand (38, 52) auslaufendem Ende unter Verwendung eines ersten Formhohlraums (14) und eines zweiten Formhohlraums (28), wobei der erste Formhohlraum (14) von einem ersten gemeinsamen Formteil (10) und einem ersten komplementären Formteil (12) und der zweite Formhohlraum (28) von dem ersten gemeinsamen Formteil (10) und einem zweiten komplementären Formteil (26) umschlossen sind, indem man
(a) den ersten gemeinsamen Formteil (10) mit dem ersten komplementären Formteil (12) zusammensetzt, um den ersten Formhohlraum (14) auszubilden,
(b) einen ersten Kunststoff (20) in den ersten Formhohlraum (14) einspritzt,
(c) den eingespritzten ersten Kunststoff zu einem ersten Kunststoffteil verfestigt,
(d) den ersten gemeinsamen Formteil (10) mit dem zweiten komplementären Formteil (26) zusammensetzt, um bei am ersten gemeinsamen Formteil (10) haftendem ersten Kunststoffteil (20) den zweiten Formhohlraum (28) auszubilden, so daß beim Ausbilden des zweiten Formhohlraums (28) der erste Kunststoffteil (20) sich im zweiten Formhohlraum (28) befindet,
(e) in den das erste Kunststoffteil (20) enthaltenden zweiten Formhohlraum einen zweiten Kunststoff einspritzt und
(f) den eingespritzten zweiten Kunststoff (32) verfestigt, um ein zweites Kunststoffteil zu bilden, das mit dem ersten Kunststoffteil (20) zu einem hohlen Kunststoffprodukt verschmilzt, wobei man im Schritt (c)
(g) das erste Kunststoffteil (20) so gestaltet, daß der im zweiten Formhohlraum (28) befindliche erste Kunststoffteil einen oder mehrere stabilisierende Bereiche (30) schafft, die den ersten gemeinsamen Formteil (10) in der Sollage relativ zum zweiten komplementären Formteil (26) halten, um im Schritt (e) eine Bewegung des ersten gemeinsamen Formteils (10) relativ zum zweiten komplementären Formteil (26) zu behindern und so ein dünnwandiges Kunststoffprodukt mit kontrollierten Abmessungen zu erreichen, **dadurch gekennzeichnet,** daß der erste Formhohlraum (14) einen den Rand des Produkts bildenden Teil aufweist und man im Schritt (b)
(h) den ersten Kunststoff einspritzt, bis er den den Rand umschließenden Teil des ersten Formhohlraums (14) erreicht.

2. Verfahren zum zyklischen Spritzformen nach Anspruch 1, **dadurch gekennzeichnet,** daß der zweite Formhohlraum (28) einen den Rand des Produkts umschließenden Teil aufweist und man im Schritt (e)
(i) den zweiten Kunststoff (32) einspritzt, bis er den den Rand des Produkts umschließenden Teil des zweiten Formhohlraums (28) erreicht.

3. Verfahren nach Anspruch 1 oder 2 zum Formen eines Produkts (62) mit einer Seitenwand (64), die einen angenähert längs verlaufenden Streifen aufweist, **dadurch gekennzeichnet,** daß man im Schritt (g) den ersten Kunststoffteil (6) so gestaltet, daß er den mindestens einen stabilisierenden Bereich (68) erzeugt, der quer zu einer Trennlinie (54) zwischen dem ersten gemeinsamen Formteil (10) und dem ersten komplementären Formteil (12) liegt, wobei der längsverlaufende Streifen vom querliegende stabilisierenden Bereich (68) umschlossen wird.

4. Verfahren nach Anspruch 3, **dadurch gekennzeichnet,** daß man im Schritt (b) einen ersten Kunststoff (66) einspritzt, der transparent ist, so daß der Streifen in der Seitenwand (64) ein transparentes Fenster bildet, und bei dem man im Schritt (e) einen zweiten Kunststoff (72) einspritzt, der nicht transparent ist.

5. Verfahren nach Anspruch 1 zum Formen eines Produkts (62) mit einer Seitenwand (64), die einen angenähert längs verlaufenden Streifen enthält, **dadurch gekennzeichnet,** daß man im Schritt (g) den ersten Kunststoffteil (66) so gestaltet, daß bei im zweiten Formhohlraum (74) enthaltenen ersten Kunststoffteil der zweite Formhohlraum (74) mindestens einen nichtgefüllten Hohlraumbereich (72) bildet, der quer zu einer Trennlinie (56) zwischen dem ersten gemeinsamen Formteil (10) und dem zweiten komplementären Formteil (26) liegt, so daß der Längsstreifen von dem ungefüllten Hohlraumbereich (72) umschlossen ist.

6. Verfahren nach Anspruch 5, **dadurch gekennzeichnet,** daß man im Schritt (b) einen ersten Kunststoff (66) einspritzt, der nicht transparent ist, und daß man im Schritt (e) einen zweiten Kunststoff spritzt, der transparent ist, so daß der Streifen ein transparentes Fennster in der Seitenwand (64) bildet.

7. Verfahren nach Anspruch 1 zum zyklischen Spritzformen einer Vielzahl dünnwandiger hohler Kunststoffprodukte, **dadurch gekennzeichnet,** daß man einen dritten Formhohlraum (42) und einen vierten Formhohlraum (48) verwendet, wobei der dritte Formhohlraum (42) von einem zweiten gemeinsamen Formteil (40) und dem ersten komplementären Formteil (12) und der vierte Formhohlraum (48) von dem zweiten gemeinsamen Formteil (40) und dem zweiten komplementären Formteil (26) gebildet sind, und daß man weiterhin
(j) im Schritt (d) den zweiten gemeinsamen Formteil (40) mit dem ersten komplementären Formteil (12) zur Bildung des dritten Formhohlraums (42) zusammensetzt,
(k) im Schritt (e) einen dritten Kunststoff in den dritten Formhohlraum (42) einspritzt,
(l) im Schritt (f) den eingespritzten dritten Kunststoff zum dritten Kunststoffteil (44) verfestigt,
(m) im Schritt (a) den zweiten gemeinsamen Formteil (40) mit dem zweiten komplementären Formteil (26) bei am zweiten gemeinsamen Formteil (40) haftendem dritten Kunststoffmaterial (44) zum vierten Formhohlraum (48) zusammensetzt, so daß beim Bilden des vierten Formhohlraums (48) der dritte Kunststoff (44) sich in diesem befindet,
(n) im Schritt (b) den vierten Kunststoff in den vierten Formhohlraum (48) spritzt, während dieser den verfestigten dritten Kunststoff enthält,
(o) im Schritt (c) den eingespritzten vierten Kunststoff zu einem vierten Kunststoffteil (50) verfestigt, das mit dem dritten Kunststoff zu einem zweiten hohlen Kunststoffprodukt (52) verschmilzt, und wobei man im Schritt (o)
(p) den dritten Kunststoffteil (44) so gestaltet, daß bei im vierten Formhohlraum (48) enthaltendem dritten Kunststoffteil (44) dieses einen oder mehrere stabilisierende Bereiche bildet, die den zweiten gemeinsamen Form teil (40) in der Sollage relativ zum zweiten komplementären Formteil (26) halten, um im Schritt (n) eine Bewegung des zweiten gemeinsamen Formteils (40) relativ zum zweiten komplementären Formteil (26) zu behindern und so ein zweites dünnwandiges Kunststoffprodukt mit kontrollierten Abmessungen zu erreichen.

8. Verfahren nach Anspruch 7 zur Herstellung der genannten Produkte mit Wänden im Schichtaufbau, **dadurch gekennzeichnet,** daß man im Schritt (b)
(q) den ersten Kunststoff einspritzt, bis er die Trennlinie (54) zwischen dem ersten gemeinsamen Formteil (10) und dem ersten komplementären Formteil (12) erreicht, daß man im Schritt (e)
(r) den zweiten Kunststoff einspritzt, bis er die Trennlinie (56) zwischen dem ersten gemeinsamen Formteil (10) und dem zweiten komplementären Formteil (26) erreicht, daß man im Schritt (i)
(s) den dritten Kunststoff einspritzt, bis er die Trennlinie (58) zwischen dem zweiten gemeinsamen Formteil (40) und dem ersten komplementären Formteil (12) erreicht, und daß man im Schritt (n)
(t) den vierten Kunststoff (50) einspritzt, bis er die Trennlinie (60) zwischen dem zweiten gemeinsamen Formteil (40) und dem zweiten komplementären Formteil (26) erreicht.

9. Verfahren nach Anspruch 7, **dadurch gekennzeichnet,** daß der erste Kunststoff der gleiche wie der dritte und der zweite Kunststoff der gleiche wie der vierte sind.

10. Verfahren nach Anspruch 1, **dadurch gekennzeichnet,** daß man weiterhin im Schritt (g) einen ersten komplementären Formteil (12) vorsieht, der relativ zum ersten gemeinsamen Formteil (10) so gestaltet ist, daß, wenn er mit dem ersten gemeinsamen Formteil (10) zur Bildung des ersten Formhohlraums (14) zusammengesetzt ist, Teile des ersten komplementären Formteils (12) Teile des ersten gemeinsamen Formteils (10) kontaktieren, um den ersten gemeinsamen Formteil (10) in der Sollage relativ zum ersten komplementären Formteil (12) starr festzulegen und so im Schritt (b) eine Bewegung des ersten gemeinsamen Formteils (10) relativ zum ersten komplementären Formteil (12) zu behindern.

11. Vorrichtung zum zyklischen Spritzformen eines dünnwandigen hohlen Kunststoffprodukts mit einem zu einem Rand auslaufenden offenen Ende
mit einem ersten gemeinsamen Formteil (10),
mit einem ersten komplementären Formteil (12),
mit Mitteln, um den ersten komplementären Formteil (12) mit dem ersten gemeinsamen Formteil (10) zusammenzusetzen, um einen ersten Formhohlraum (14) zu bilden,
mit einer Einrichtung (22, 24) zum Einspritzen eines ersten Kunststoffs in den ersten Formhohlraum (14),
mit Mitteln, um den eingespritzten ersten Kunststoff zu einem ersten Kunststoffteil (20) zu verfestigen,
mit einem zweiten komplementären Formteil (26), mit Mitteln, um den ersten gemeinsamen Formteil (10) mit dem zweiten komplementären Formteil (26) zusammenzusetzen und so bei am ersten gemeinsamen Formteil (10) haftendem ersten Kunststoffteil (20) einen zweiten Formhohlraum (28) auszubilden, so daß bei zusammengesetztem zweiten Formhohlraum (28) dieser den ersten Kunststoffteil (20) enthält,
mit einer Einrichtung (34, 36) zum Einspritzen eines zweiten Kunststoffs in den zweiten Formhohlraum (28), während dieser das verfestigte erste Kunststoffteil enthält,
mit Mitteln zum Verfestigen des eingespritzten zweiten Kunststoffs zur Bildung eines zweiten Kunststoffteils (32), das mit dem ersten Kunststoffteil (20) zur Bildung eines hohlen Kunststoffprodukts verschmilzt, sowie
mit Mitteln, die das erste Kunststoffteil (20) so gestalten, daß bei im zweiten Hohlraum (28) enthaltenen verfestigtem ersten Kunststoffteil (20) letzteres einen oder mehrere stabilisierende Bereiche (30) bildet, die den ersten gemeinsamen Formteil (10) in der Sollage relativ zum zweiten komplementären Formteil (26) halten, um eine Bewegung des ersten gemeinsamen Formteils (10) relativ zum zweiten komplementären Formteil (26) beim Einspritzen des zweiten Kunststoffs in den zweiten Formhohlraum (28) zu behindern und so ein dünnwandiges Kunststoffprodukt mit kontrollierten Abmessungen zu erreichen,
**dadurch gekennzeichnet,** daß der erste Formhohlraum (14) einen den Rand des Produkts bildenden Teil und die Einrichtung zum Einspritzen des ersten Kunststoffs Mittel aufweisen, um den ersten Kunststoff einzuspritzen, bis er den den Rand bildenden Teil des ersten Formhohlraums (14) erreicht.

12. Vorrichtung nach Anspruch 11, **dadurch gekennzeichnet,** daß der zweite Formhohlraum (28) einen den Rand des Produkts bildenden Teil aufweist und die Einrichtung (34, 36) zum Einspritzen des zweiten Kunststoffs so angeordnet ist, daß sie den zweiten Kunststoff einspritzt, bis er den den Rand bildenden Teil des zweiten Formhohlraums (28) erreicht.

13. Vorrichtung nach Anspruch 11 zum Formen eines Produkts mit einer Seitenwand (64), die einen angenähert längs verlaufenden Streifen enthält, **dadurch gekennzeichnet,** daß die Einrichtung zum Gesalten des ersten Kunststoffteils diesem den mindestens einen stabilisierenden Bereich (68) erteilen, der quer zu einer Trennlinie (54) zwischen dem ersten gemeinsamen Formteil (10) und dem ersten komplmentären Formteil (12) liegt, so daß der längsverlaufende Streifen von dem querliegenden stabilisierenden Bereich (68) umschlossen wird.

14. Vorrichtung nach Anspruch 11 zum Formen eines Produkts (62) mit eine Seitenwand (64), die einen angenähert längs verlaufenden Streifen enthält, **dadurch gekennzeichnet,** daß die Einrichtung zum Gestalten des ersten Kunststoffteils (66) dieses so gestaltet, daß bei im zweiten Formhohlraum (74) enthaltenem erstem Kunststoffteil der zweite Formhohlraum (74) mindestens einen ungefüllten Hohlraumbereich (72) enthält, der quer zu einer Trennlinie (56) zwischen dem ersten gemeinsamen Formteil (10) und dem zweiten komplementären Formteil (26) liegt, so daß der längsverlaufende Streifen vom ungefüllten querliegenden Hohlraumbereich (72) gebildet wird.

15. Vorrichtung nach Anspruch 11 zum zyklischen Spritzformen einer Vielzahl dünnwandiger hohler Kunststoffprodukte
mit einem zweiten gemeinsamen Formteil (40),
mit Mitteln, um den ersten komplementären Formteil (12) mit dem zweiten gemeinsamen Formteil (40) unter Bildung eines dritten Formhohlraums (42) zusammenzusetzen, während der zweite komplementäre Formteil (40) mit dem ersten gemeinsamen Formteil (10) unter Bildung des zweiten Formhohlraums zusammengesetzt wird,
mit einer Einrichtung (22, 24) zum Einspritzen eines dritten Kunststoffs in den dritten Formhohlraum (42),
mit Mitteln zum Verfestigen des dritten Kunststoffs zu einem dritten Kunststoffteil (44),
mit Mitteln, um den zweiten gemeinsamen Formteil (40) mit dem zweiten komplementären Formteil (26) unter Bildung eines vierten Formhohlraums (48) zusammenzusetzen, während der erste komplementäre Formteil (12) mit dem ersten gemeinsamen Formteil (10) unter Bildung des ersten Formhohlraums (14) zusammengesetzt wird, während das dritte Kunststoffmaterial am zweiten gemeinsamen Formteil (40) haftenbleibt, so daß beim Bilden des vierten Formhohlraums (48) dieser den dritten Kunststoff enthält,
mit einer Einrichtung (34, 36) zum Einspritzen eines vierten Kunststoffs in den vierten Formhohlraum (48), während dieser den verfestigten dritten Kunststoff enthält, und
mit Mitteln, um den eingespritzten vierten Kunststoff zu einem vierten Kunststoffteil (50) zu verfestigten, das mit dem dritten Kunststoff zu eiunem zweiten hohlen Kunststoffprodukt verschmilzt,
**dadurch gekennzeichnet,** daß die Einrichtung zum Verfestigen des eingespritzten dritten Kunststoffs Mittel zum Gestalten des dritten Kunststoffteils (44) derart aufweist, daß bei im vierten Formhohlraum (48) enthaltenem dritten Kunststoffteil (44) dieses einen oder mehrere stabilisierende Bereiche schafft, die den zweiten gemeinsamen Formteil (40) starr in der Sollage relativ zum ersten komplementären Formteil (12) halten, um eine Bewegung des zweiten gemeinsamen Formteils (40) relativ zum ersten komplementären Formteil (12) beim Einspritzen des vierten Kunststoffs in den vierten Formhohlraum (48) zu behindern und so ein zweites dünnwandiges Kunststoffprodukt mit kontrollierten Abmessungen zu erzeugen.

16. Vorrichtung nach Anspruch 11, **dadurch gekennzeichnet,** daß der erste komplementäre Formteil (12) relativ zum ersten gemeinsamen Formteil (10) so bemessen ist, daß, wenn er mit dem ersten gemeinsamen Formteil zur Bildung des ersten Formhohlraums (14) zusammengesetzt ist, Teile des ersten komplementären Formteils (12) Teile des ersten gemeinsamen Formteils (10) kontaktieren, um den ersten gemeinsamen Formteil (10) starr relativ zum ersten komplementären Formteil (12) festzulegen und so eine Bewegung des ersten gemeinsamen Formteils (10) relativ zum ersten komplementären Formteil (12) beim Einspritzen des ersten Kunststoffs in den ersten Formhohlraum (14) zu behindern.

## Revendications

1. Procédé de moulage par injection cyclique d'un produit en matière plastique creux à parois minces comportant une extrémité ouverte se terminant par un rebord (38, 52), en utilisant une première cavité de moule (14) et une seconde cavité de moule (28), la première cavité de moule (14) étant définie par une première partie de moule commune (10) et une première partie de moule complémentaire (12), tandis que la seconde cavité de moule (28) est définie par la première partie de moule commune (10) et une seconde partie de moule complémentaire (26), le procédé comprenant les étapes consistant à :
(a) combiner la première partie de moule commune (10) à la première partie de moule complémentaire (12) pour assembler la première cavité de moule (14) ;
(b) injecter une première matière plastique (20) dans la première cavité de moule (14) ;
(c) solidifier la première matière plastique injectée pour former un premier composant en matière plastique ;
(d) combiner la première partie de moule commune (10) avec la seconde partie de moule complémentaire (26) pour assembler la seconde cavité de moule (28), avec le premier composant en matière plastique (20) attaché à la première partie de moule commune (10), de façon que, lorsqu'on assemble la seconde cavité de moule (28), le premier composant en matière plastique (20) soit contenu dans la seconde cavité de moule (28) ;
(e) injecter une seconde matière plastique dans la seconde cavité de moule tandis que le premier composant en matière plastique (20) est contenu dans celle-ci ; et
(f) solidifier la seconde matière plastique injectée (32) pour former un second composant en matière plastique qui fusionne avec le premier composant en matière plastique (20) pour donner un produit en matière plastique creux ;
dans lequel l'étape (c) comprend l'étape consistant à :
(g) mettre en forme le premier composant en matière plastique (20) de façon que, lorsque ce premier composant en matière plastique (20) est ainsi contenu dans la seconde cavité de moule (28), ce premier composant en matière plastique (20) fournisse une ou plusieurs zones de stabilisation (30) qui fixent rigidement la première partie de moule commune (10) en place par rapport à la seconde partie de moule complémentaire (26) pour empêcher le mouvement de la première partie de moule commune (10) par rapport à la seconde partie de moule complémentaire (26) pendant l'étape (e), pour fabriquer ainsi un produit en matière plastique à parois minces présentant des dimensions contrôlées ;
caractérisé en ce que la première cavité de moule (14) comporte une partie définissant le rebord du produit, et en ce que l'étape (b) comprend l'étape consistant à :
(h) injecter la première matière plastique (20) jusqu'à ce qu'elle atteigne la partie de définition de rebord de la première cavité de moule (14).

2. Procédé de moulage par injection cyclique selon la revendication 1, caractérisé en ce que la seconde cavité de moule (28) comporte une partie définissant le rebord du produit, et l'étape (e) comprend l'étape consistant à :
(i) injecter la seconde matière plastique (32) jusqu'à ce qu'elle atteigne la partie de la seconde cavité de moule (28) qui définit le rebord du produit.

3. Procédé selon l'une des revendications 1 ou 2, pour mouler un produit (62) comportant une paroi latérale (64) munie d'une bande approximativement longitudinale, caractérisé en ce que l'étape (g) comprend la mise en forme du premier composant en matière plastique (66) pour fournir au moins une zone de stabilisation (68) qui soit transversale par rapport à une ligne de séparation (54) entre la première partie de moule commune (10) et la première partie de moule complémentaire (12), de sorte que la bande longitudinale est définie par la zone de stabilisation transversale (68).

4. Procédé selon la revendication 3, caractérisé en ce que l'étape (b) comprend l'injection d'une première matière plastique (66) qui est transparente, de sorte que la bande définit une fenêtre transparente dans la paroi latérale (64) ; et en ce que l'étape (e) comprend l'injection d'une seconde matière plastique (72) qui n'est pas transparente.

5. Procédé selon la revendication 1, pour mouler un produit (62) comportant une paroi latérale (64) munie d'une bande approximativement longitudinale, caractérisé en ce que l'étape (g) comprend la mise en forme du premier composant en matière plastique (66) de façon que, lorsque ce premier composant en matière plastique est contenu dans la seconde cavité de moule (74), cette seconde cavité de moule (74) définisse au moins une zone de cavité non remplie (72) qui soit transversale par rapport à une ligne de séparation (56) entre la première partie de moule commune (10) et la seconde partie de moule complémentaire (26), de sorte que la bande longitudinale est définie par cette zone de cavité transversale non remplie (72).

6. Procédé selon la revendication 5, caractérisé en ce que l'étape (b) comprend l'injection 6d'une première matière plastique (66) qui n'est pas transparente ; et en ce que l'étape (e) comprend l'injection d'une seconde matière plastique qui est transparente, de sorte que la bande définit une fenêtre transparente dans la paroi latérale (64).

7. Procédé selon la revendication 1, pour le moulage par injection cyclique d'une pluralité de produits en matière plastique creux à parois minces, utilisant en outre une troisième cavité de moule (42) et une quatrième cavité de moule (58), la troisième cavité de moule (42) étant définie par une seconde partie de moule commune (40) et par la première partie de moule complémentaire (12), et la quatrième cavité de moule (48) étant définie par la seconde partie de moule commune (40) et par la seconde partie de moule complémentaire (26), le procédé comprenant en outre les étapes consistant à :
(j) pendant l'étape (d), combiner la seconde partie de moule commune (40) avec la première partie de moule complémentaire (12) pour assembler la troisième cavité de moule (42) ;
(k) pendant l'étape (e), injecter une troisième matière plastique dans la troisième cavité de moule (42) ;
(l) pendant l'étape (f), solidifier la troisième matière plastique injectée pour former le troisième composant en matière plastique (44) ;
(m) pendant l'étape (a), combiner la seconde partie de moule commune (40) avec la seconde partie de moule complémentaire (26) pour assembler la quatrième cavité de moule (48), avec la troisième matière plastique (44) attachée à la seconde partie de moule commune (40), de façon que, lorsqu'on assemble la quatrième cavité de moule (48), la troisième matière plastique (44) soit contenue dans la quatrième cavité de moule (48) ;
(n) pendant l'étape (b), injecter la quatrième matière plastique dans la quatrième cavité de moule (48) tandis que la troisième matière plastique solidifiée est contenue dans celle-ci ; et
(o) pendant l'étape (c), solidifier la quatrième matière plastique injectée de manière à former un troisième composant en matière plastique (50) qui fusionne avec la troisième matière plastique pour donner un second produit en matière plastique creux (52) ;
caractérisé en ce que l'étape (o) comprend l'étape consistant à :
(p) mettre en forme le troisième composant en matière plastique (44) de façon que, lorsque ce troisième composant en matière plastique (44) est ainsi contenu dans la quatrième cavité de moule (48), ce troisième composant en matière plastique (44) fournisse une ou plusieurs zones de stabilisation qui fixent rigidement la seconde partie de moule commune (40) en place par rapport à la seconde partie de moule complémentaire (26) pour empêcher le mouvement de la seconde partie de moule commune (40) par rapport à la seconde partie de moule complémentaire (26) pendant l'étape (n), de manière à fabriquer ainsi un second produit en matière plastique à parois minces présentant des dimensions contrôlées.

8. Procédé selon la revendication 7, pour la fabrication de produits comportant des parois stratifiées, caractérisé en ce que l'étape (b) comprend l'étape consistant à :
(q) injecter la première matière plastique jusqu'à ce qu'elle atteigne la ligne de séparation (54) entre la première partie de moule commune (10) et la première partie de moule complémentaire (12) ;
l'étape (e) comprend l'étape consistant à :
(r) injecter la seconde matière plastique jusqu'à ce qu'elle atteigne la ligne de séparation (56) entre la première partie de moule commune (10) et la seconde partie de moule complémentaire (26) ;
l'étape (i) comprend l'étape consistant à :
(s) injecter la troisième matière plastique jusqu'à ce qu'elle atteigne la ligne de séparation (58) entre la seconde partie de moule commune (40) et la première partie de moule complémentaire (12) ; et
l'étape (n) comprend l'étape consistant à :
(t) injecter la quatrième matière plastique (50) jusqu'à ce qu'elle atteigne la ligne de séparation (60) entre la seconde partie de moule commune (40) et la seconde partie de moule complémentaire (26).

9. Procédé selon la revendication 7, caractérisé en ce que la première matière plastique est la même que la troisième matière plastique, et en ce que la seconde matière plastique est la même que la quatrième matière plastique.

10. Procédé selon la revendication 1, caractérisé en ce que l'étape (g) comprend en outre l'utilisation d'une première partie de moule complémentaire (12) qui est dimensionnée par rapport à la première partie de moule commune (10) de façon que, lorsqu'elle est ainsi combinée à la première partie de moule commune (10) pour assembler la première cavité de moule (14), des parties de la première partie de moule complémentaire (12) viennent en contact avec des parties de la première partie de moule commune (10) pour fixer rigidement la première partie de moule commune en place par rapport à la première partie de moule complémentaire (12), de manière à empêcher le mouvement de la première partie de moule commune (10) par rapport à la première partie de moule complémentaire (12) pendant l'étape (b).

11. Appareil pour le moulage par injection cyclique d'un produit en matière plastique creux à parois minces comportant une extrémité ouverte se terminant par un rebord, comprenant :
- une première partie de moule commune (10) ;
- une première partie de moule complémentaire (12) ;
- des moyens pour combiner la première partie de moule complémentaire (12) avec la première partie de moule commune (10) de manière à assembler une première cavité de moule (14) ;
- des moyens (22, 24) pour injecter une première matière plastique dans la première cavité de moule (14) ;
- des moyens pour solidifier la première matière plastique injectée de manière à former un premier composant en matière plastique (20) ;
- une seconde partie de moule complémentaire (26) ;
- des moyens pour combiner la première partie de moule commune (10) avec la seconde partie de moule complémentaire (26) de manière à assembler une seconde cavité de moule (28), avec le premier composant en matière plastique (20) attaché à la première partie de moule commune (10), de façon que, lorsqu'on assemble la seconde cavité de moule (28), le premier composant en matière plastique (20) soit contenu dans la seconde cavité de moule (28) ;
- des moyens (34, 36) pour injecter une seconde matière plastique dans la seconde cavité de moule (28) tandis que le premier composant en matière plastique solidifié est contenu dans celle-ci ;
- des moyens pour solidifier la seconde matière plastique injectée de manière à former un second composant en matière plastique (32) qui fusionne avec le premier composant en matière plastique (20) pour donner un produit en matière plastique creux ; et
- des moyens pour mettre en forme le premier composant en matière plastique (20) de façon que, lorsque ce premier composant en matière plastique solidifié est ainsi contenu dans la seconde cavité de moule (28), le premier composant en matière plastique solidifié (20) fournisse une ou plusieurs zones de stabilisation (30) qui fixent rigidement la première partie de moule commune (10) en place par rapport à la seconde partie de moule complémentaire (26), de manière à empêcher le mouvement de la première partie de moule commune (10) par rapport à la seconde partie de moule complémentaire (26) pendant l'injection de la seconde matière plastique dans la seconde cavité de moule (28), pour fabriquer ainsi un produit en matière plastique à parois minces présentant des dimensions contrôlées, caractérisé en ce que :
- la première cavité de moule (14) comporte une partie définissant le rebord du produit ; et
- les moyens d'injection de la première matière plastique comprennent des moyens d'injection de cette première matière plastique jusqu'à ce qu'elle atteigne la partie de définition de rebord de la première cavité de moule (14).

12. Appareil selon la revendication 11, caractérisé en ce que la seconde cavité de moule (28) comporte une partie qui définit le rebord du produit, et en ce que les moyens (34, 36) d'injection de la seconde matière plastique sont disposés pour injecter la seconde matière plastique jusqu'à ce qu'elle atteigne la partie de définition de rebord de la seconde cavité de moule (28).

13. Appareil selon la revendication 11, pour le moulage d'un produit comportant une paroi latérale (64) munie d'une bande approximativement longitudinale, caractérisé en ce que les moyens de mise en forme du premier composant en matière plastique, forment ce premier composant en matière plastique de manière à obtenir au moins une zone de stabilisation (68) qui soit transversale par rapport à une ligne de séparation (54) entre la première partie de moule commune (10) et la première partie de moule complémentaire (12), de sorte que la bande longitudinale est définie par cette zone de stabilisation transversale (68).

14. Appareil selon la revendication 11, pour mouler un produit (62) comportant une paroi latérale (64) munie d'une bande approximativement longitudinale, caractérisé en ce que les moyens de mise en forme du premier composant en matière plastique, forment ce premier composant en matière plastique (66) de façon que, lorsque ce premier composant en matière plastique est contenu dans la seconde cavité de moule (74), cette seconde cavité de moule (74) définisse au moins une zone de cavité non-remplie (72) qui soit transversale par rapport à une ligne de séparation (56) entre la première partie de moule commune (10) et la seconde partie de moule complémentaire (26), de sorte que la bande longitudinale est définie par cette zone de cavité transversale non remplie (72).

15. Appareil selon la revendication 11, pour le moulage par injection cyclique d'une pluralité de produits en matière plastique creux à parois minces, comprenant en outre :
- une seconde partie de moule commune (40) ;
- des moyens pour combiner la première partie de moule complémentaire (12) avec la seconde partie de moule commune (40) de manière à assembler une troisième cavité de moule (42), tandis qu'on combine la seconde partie de moule complémentaire (40) avec la première partie de moule commune (10) pour assembler la seconde cavité de moule ;
- des moyens (22, 24) pour injecter une troisième matière plastique dans la troisième cavité de moule (42) ;
- des moyens pour solidifier la troisième matière plastique injectée de manière à former un troisième composant en matière plastique (44) ;
- des moyens pour combiner la seconde partie de moule commune (40) avec la seconde partie de moule complémentaire (26) de manière à assembler une quatrième cavité de moule (48), tandis qu'on combine la première partie de moule complémentaire (12) avec la première partie de moule commune (10) pour assembler la première cavité de moule (14), tout en maintenant la troisième matière plastique attachée à la seconde partie de moule commune (40) de façon que, lorsqu'on assemble la quatrième cavité de moule (48), la troisième matière plastique soit contenue dans la quatrième cavité de moule ;
- des moyens (34, 36) pour injecter une quatrième matière plastique dans la quatrième cavité de moule (48) tandis que la troisième matière plastique solidifiée est contenue dans celle-ci ; et
- des moyens pour solidifier la quatrième matière plastique injectée de manière à former un quatrième composant en matière plastique (50) qui fusionne avec la troisième matière plastique pour donner un second produit en matière plastique creux ;
caractérisé en ce que les moyens de solidification de la troisième matière plastique injectée comprennent des moyens de mise en forme du troisième composant en matière plastique (44) de façon que, lorsque ce troisième composant en matière plastique (44) est ainsi contenu dans la quatrième cavité de moule (48), la troisième matière plastique solidifiée fournisse une ou plusieurs zones de stabilisation qui fixent rigidement la seconde partie de moule commune (40) en place par rapport à la première partie de moule complémentaire (12), de manière à empêcher le mouvement de la seconde partie de moule commune (40) par rapport à la première partie de moule complémentaire (12) pendant l'injection de la quatrième matière plastique dans la quatrième cavité de moule (48), pour fabriquer ainsi un second produit en matière plastique à parois minces présentant des dimensions contrôlées.

16. Appareil selon la revendication 11, caractérisé en ce que la première partie de moule complémentaire (12) est dimensionnée, par rapport à la première partie de moule commune (10), de façon que, lorsqu'on la combine ainsi avec la première partie de moule commune pour assembler la première cavité de moule (14), des parties de la première partie de moule complémentaire (12) viennent en contact avec des parties de la première partie de moule commune (10) pour fixer rigidement la première partie de moule commune (10) en place par rapport à la première partie de moule complémentaire (12), de manière à empêcher le mouvement de la première partie de moule commune (10) par rapport à la première partie de moule complémentaire (12) pendant l'injection de la première matière plastique dans la première cavité de moule (14).
